# EUROPEAN PATENT APPLICATION

(11) **EP 4 818 811 A1**
(43) Date of publication of application: **07.10.2026**
(21) Application number: 26163085.9
(22) Date of filing: 09.03.2026
(51) Int. Cl.: G03G 15/00, G03G 21/20

(54) **SENSOR APPARATUS AND IMAGE FORMING APPARATUS**

(30) Priority: 31.03.2025 JP 2025058553
(71) Applicant: KYOCERA Document Solutions Inc., Osaka-shi, Osaka 540-8585 (JP)
(72) Inventor: Shibahara, Masami, Osaka-shi, 540-8585 (JP)
(74) Representative: Plougmann Vingtoft a/s

(57) **Abstract**

A sensor apparatus is a sensor apparatus that outputs an output signal corresponding to a density of a toner image in an image forming apparatus. The sensor apparatus includes a light emitting element, a light receiving element, and an impedance element. The light emitting element irradiates light onto an image carrier that carries the toner image. The light receiving element receives light reflected off the image carrier. The impedance element changes an impedance of the impedance element according to a temperature of the impedance element. The output signal is a signal of which a magnitude is changed according to an amount of light received by the light receiving element. The impedance element is connected to the light emitting element or the light receiving element such that a change in the magnitude of the output signal that is caused due to a change in a temperature of the light emitting element is reduced.

## Description

### INCORPORATION BY REFERENCE

This application is based upon and claims the benefit of priority from the corresponding Japanese Patent Application No. 2025-058553 filed on March 31, 2025, the entire contents of which are incorporated herein by reference.

The present disclosure relates to a sensor apparatus and an image forming apparatus.

### BACKGROUND

An image forming apparatus that reads, using a light sensor, a detection image formed on an image carrier, and that detects an image density of the detection image according to a result of the reading is known as a related technology. The light sensor includes a light emitting element that irradiates the detection image with light, a light receiving element that receives reflected light, a temperature detector that detects a temperature of the light sensor, and a current adjuster that adjusts an amount of current supplied to the light emitting element, on the basis of the temperature of the light sensor.

### SUMMARY

A sensor apparatus according to an aspect of the present disclosure is a sensor apparatus that outputs an output signal corresponding to a density of a toner image in an image forming apparatus. The sensor apparatus includes a light emitting element, a light receiving element, and an impedance element. The light emitting element irradiates light onto an image carrier that carries the toner image. The light receiving element receives light reflected off the image carrier. The impedance element changes an impedance of the impedance element according to a temperature of the impedance element. The output signal is a signal of which a magnitude is changed according to an amount of light received by the light receiving element. The impedance element is connected to the light emitting element or the light receiving element such that a change in the magnitude of the output signal that is caused due to a change in a temperature of the light emitting element is reduced.

An image forming apparatus according to another aspect of the present disclosure includes the sensor apparatus, an image forming section, and an adjustment processing section. The image forming section includes the image carrier and forms the toner image. The adjustment processing section adjusts the density of the toner image on the basis of the output signal output by the sensor apparatus.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a schematic cross-sectional view illustrating a configuration of an image forming apparatus according to a first embodiment;
Fig. 2 is a schematic block diagram illustrating the configuration of the image forming apparatus according to the first embodiment;
Fig. 3 schematically illustrates arrangement of sensor apparatuses according to the first embodiment;
Fig. 4 schematically illustrates a circuit showing a configuration of the sensor apparatus according to the first embodiment;
Fig. 5 schematically illustrates a change in a magnitude of an output signal relative to a change in a temperature of the sensor apparatus according to the first embodiment;
Fig. 6 schematically illustrates a circuit showing a configuration of a sensor apparatus according to a second embodiment; and
Fig. 7 schematically illustrates a circuit showing another configuration of the sensor apparatus according to the second embodiment.

### DETAILED DESCRIPTION

### First Embodiment

Embodiments of the present disclosure will now be described below with reference to the accompanying drawings. The following embodiments are merely examples in which the present disclosure is embodied, and are not intended to limit the scope of the present disclosure.

### 1. Overall Configuration of Image Forming Apparatus

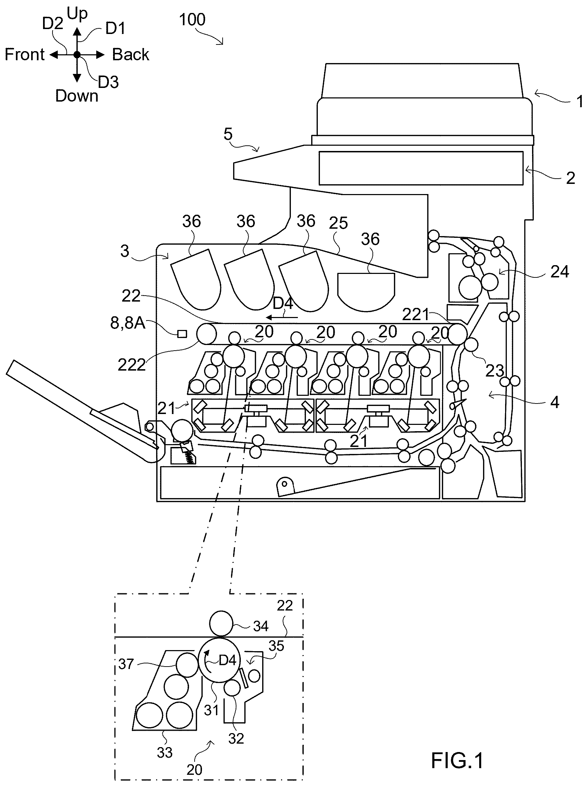

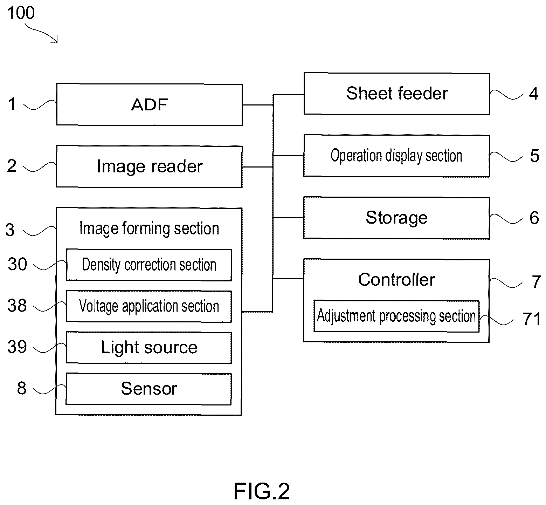

First, an overall configuration of an image forming apparatus 100 according to the present embodiment is described with reference to Figs. 1 and 2.

Note that, for convenience of description, an orthogonal direction in an installation state (a state illustrated in Fig. 1) in which the image forming apparatus 100 is installed to be usable is defined as an up-and-down direction D1. Further, a front-and-back direction D2 is defined, with a left side of the image forming apparatus 100 on the surface of the sheet of Fig. 1 being the front (a front side). Furthermore, a right-and-left direction D3 is defined on the basis of the front of the image forming apparatus 100 in the installation state.

The image forming apparatus 100 is a multifunctional device that includes a plurality of functions such as a facsimile function and a copying function in addition to a scanning function to read an image of a document, and a printing function to form an image on the basis of image data. Note that the present disclosure may be applied to an image forming apparatus, such as a printer, a facsimile machine, or a copying machine, that can form an image by electrophotography.

As illustrated in Figs. 1 and 2, the image forming apparatus 100 includes an auto document feeder (ADF) 1, an image reader 2, an image forming section 3, a sheet feeder 4, an operation display section 5, a storage 6, and a controller 7.

The ADF1 transports a document to be read using the scanning function. The ADF1 includes a document setup portion, a plurality of transportation rollers, a document holding portion, and a sheet discharge portion.

The image reader 2 provides the scanning function. The image reader 2 includes a platen, a light source, a plurality of mirrors, an optical lens, and a charge coupled device (CCD).

The image forming section 3 provides the printing function. Specifically, the image forming section 3 forms, according to electrophotography, a color image or a monochrome image on a sheet supplied by the sheet feeder 4. The image forming section 3 forms an image using toner. Further, in process of forming an image on a sheet, the image forming section 3 forms a toner image on an intermediate transfer belt 22 being described later and serving as an image carrier. In other words, the image forming section 3 includes the intermediate transfer belt 22 (an image carrier), and forms a toner image on the intermediate transfer belt 22.

The sheet feeder 4 supplies sheets to the image forming section 3. The sheet feeder 4 includes a sheet cassette, a manual feeding tray, and a plurality of transportation rollers.

The operation display section 5 is a user interface of the image forming apparatus 100. The operation display section 5 includes a display section such as a liquid crystal display that displays thereon various information in response to control instructions being given by the controller 7, and an operation section, such as an operation key or a touchscreen, with which various information is input to the controller 7 in response to the operation section being operated by a user.

The storage 6 is a nonvolatile storage apparatus. For example, the storage 6 is a nonvolatile memory such as a flash memory. Note that the storage 6 may be a solid state drive (SSD) or a hard disk drive (HDD).

The controller 7 performs overall control on the image forming apparatus 100. The controller 7 includes a CPU, a read only memory (ROM), and a random access memory (RAM). The CPU is a processor that performs various computational processes . The ROM is a nonvolatile storage apparatus that has stored therein information regarding, for example, a control program used to cause the CPU to perform various processes. The RAM is a volatile or nonvolatile storage apparatus used as a temporary storage memory (a working region) for various processes performed by the CPU. The CPU performs overall control on the image forming apparatus 100 by executing various control programs stored in the ROM in advance.

Note that the controller 7 may be a controller that is provided independently of a primary controller that performs overall control on the image forming apparatus 100. Further, the controller 7 may include an electronic circuit such as an integrated circuit (an application specific integrated circuit (ASIC)).

Next, a configuration of the image forming section 3 is described with reference to Figs. 1 and 2. As illustrated in Fig. 1, the image forming section 3 includes four image forming units 20, two light scanning apparatuses 21, the intermediate transfer belt 22, a secondary transfer roller 23, a fixation apparatus 24, and a sheet discharge tray 25. Further, as illustrated in Fig. 2, the image forming section 3 includes a density correction section 30, a voltage application section 38, a light source 39, and a sensor apparatus 8.

The four image forming units 20 respectively form a toner image of Y (yellow), a toner image of C (cyan), a toner image of M (magenta), and a toner image of K (black). As illustrated in Fig. 1, the four image forming units 20 are arranged in the front-and-back direction D2 in the order of yellow, cyan, magenta, and black from the front side of the image forming apparatus 100.

As illustrated in Fig. 1, each of the four image forming units 20 includes a photoconductor drum 31, a charging roller 32, a development apparatus 33, a primary transfer roller 34, a drum cleaning section 35, and a toner container 36.

An electrostatic latent image is formed on a surface of the photoconductor drum 31. The photoconductor drum 31 is rotated by being subjected to a rotational driving force supplied by a motor (not illustrated). As a result, the photoconductor drum 31 transports the electrostatic latent image formed on the surface of the photoconductor drum 31.

The charging roller 32 charges the surface of the photoconductor drum 31 by a preset charging voltage being applied to the charging roller 32. For example, the charging roller 32 positively charges the surface of the photoconductor drum 31. The surface included in the photoconductor drum 31 and charged by the charging roller 32 is irradiated with light that is based on image data and emitted by the light scanning apparatus 21. This results in forming an electrostatic latent image on the surface of the photoconductor drum 31.

The development apparatus 33 develops an electrostatic latent image formed on the surface of the photoconductor drum 31. The development apparatus 33 includes a pair of stirring members, a magnet roller, and a development roller 37. The pair of stirring members stirs a developer that contains toner and a carrier, where the developer is accommodated inside of the development apparatus 33. The magnet roller draws up the developer stirred by the pair of stirring members, and supplies the development roller 37 with the toner contained in the developer. The development roller 37 transports, to a facing position at which the development roller 37 faces the photoconductor drum 31, toner supplied by the magnet roller. Further, the development roller 37 supplies the photoconductor drum 31 with the toner transported to the facing position, by a preset development bias voltage being applied to the development roller 37. As a result, the toner is selectively supplied to an exposure region, of the photoconductor drum 31, that is irradiated with the light emitted by the light scanning apparatus 21, and the electrostatic latent image formed on the surface of the photoconductor drum 31 is developed. Note that the development apparatus 33 is supplied with toner from the toner container 36.

The voltage application section 38 is a power supply that can apply a development bias voltage to the development roller 37. The voltage application section 38 is provided correspondingly to each of the four image forming units 20.

In response to being supplied with a preset primary transfer current, the primary transfer roller 34 transfers, onto an outer peripheral surface of the intermediate transfer belt 22, a toner image formed on the surface of the photoconductor drum 31. The primary transfer roller 34 is provided to face the photoconductor drum 31, with the intermediate transfer belt 22 being situated between the primary transfer roller 34 and the photoconductor drum 31.

The drum cleaning section 35 removes toner left on the surface of the photoconductor drum 31 after the toner image is transferred by the primary transfer roller 34.

The density correction section 30 corrects a density of image-forming-target image data on the basis of predetermined table data. Specifically, the density correction section 30 corrects the density of the image-forming-target image data such that a density of image data input to the image forming section 3 and a density of an image formed by the image forming section 3 have a linear relationship. In other words, the density correction section 30 performs a so-called gamma correction. Further, the table data described above is data that indicates a gamma table used to perform the gamma correction.

The density correction section 30 and the table data described above are provided for each print color. The density correction section 30 corresponding to Y (yellow) corrects a density of image data for Y (yellow) on the basis of first table data that is table data corresponding to Y (yellow). The density correction section 30 corresponding to C (cyan) corrects a density of image data for C (cyan) on the basis of second table data that is table data corresponding to C (cyan). The density correction section 30 corresponding to M (magenta) corrects a density of image data for M (magenta) on the basis of third table data that is table data corresponding to M (magenta). The density correction section 30 corresponding to K (black) corrects a density of image data for K (black) on the basis of fourth table data that is table data corresponding to K (black).

The light source 39 emits light based on image data obtained after the density correction performed by the density correction section 30. The light source 39 is provided for each print color.

Each of the two light scanning apparatuses 21 emits light based on image data toward the surface of the photoconductor drum 31 of each image forming unit 20. The two light scanning apparatuses 21 are aligned in the front-and-back direction D2.

The light scanning apparatus 21 being from between the two light scanning apparatuses 21 and arranged on the front side emits light based on image data for Y (yellow) toward the photoconductor drum 31 of the image forming unit 20 corresponding to Y (yellow). Further, the light scanning apparatus 21 arranged on the front side emits light based on image data for C (cyan) toward the photoconductor drum 31 of the image forming unit 20 corresponding to C (cyan). The light scanning apparatus 21 being from between the two light scanning apparatuses 21 and arranged on a back side emits light based on image data for M (magenta) toward the photoconductor drum 31 of the image forming unit 20 corresponding to M (magenta). Further, the light scanning apparatus 21 arranged on the back side emits light based on image data for K (black) toward the photoconductor drum 31 of the image forming unit 20 corresponding to K (black). Each of the two light scanning apparatuses 21 scans light emitted by the light source 39 to form an electrostatic latent image on the photoconductor drum 31.

The intermediate transfer belt 22 is an endless belt member onto which a toner image formed on the surface of the photoconductor drum 31 of each of the four image forming units 20 is transferred. The intermediate transfer belt 22 is an example of an image carrier of the present disclosure. The intermediate transfer belt 22 is suspended by a drive roller 221 and a suspending roller 222 with a specified tension. The intermediate transfer belt 22 is rotated in a rotational direction D4 by the drive roller 221 being rotated by being subjected to a rotational driving force supplied by the motor (not illustrated). Accordingly, the intermediate transfer belt 22 transports, to a transfer position, a toner image transferred from each photoconductor drum 31, where the toner image is transferred onto a sheet by the secondary transfer roller 23 at the transfer position. Note that the outer peripheral surface of the intermediate transfer belt 22 after the toner image is transferred by the secondary transfer roller 23 is cleaned by the belt cleaning section (not illustrated).

In response to being supplied with a preset secondary transfer current, the secondary transfer roller 23 transfers, onto a sheet supplied by the sheet feeder 4, a toner image transferred onto the outer peripheral surface of the intermediate transfer belt 22. The secondary transfer roller 23 is provided to face the drive roller 221, with the intermediate transfer belt 22 being situated between the secondary transfer roller 23 and the drive roller 221.

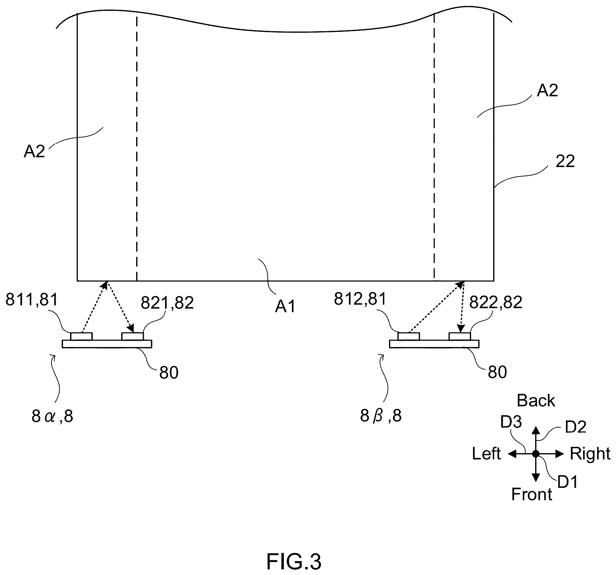

Here, a size of the secondary transfer roller 23 in an axial direction (the right-and-left direction D3) is smaller than a width of the intermediate transfer belt 22 (a size in the right-and-left direction D3). Thus, the outer peripheral surface of the intermediate transfer belt 22 includes a contactless region A2 that is not brought into contact with the secondary transfer roller 23, as illustrated in Fig. 3. The contactless region A2 is a region situated outwardly from a contact region A1, on the outer peripheral surface of the intermediate transfer belt 22, that is brought into contact with the secondary transfer roller 23, and is a region that includes an end of the intermediate transfer belt 22 in its width direction.

The fixation apparatus 24 fixes, to a sheet, a toner image transferred onto the sheet by the secondary transfer roller 23.

The sheet to which the toner image is fixed by the fixation apparatus 24 is discharged into the sheet discharge tray 25.

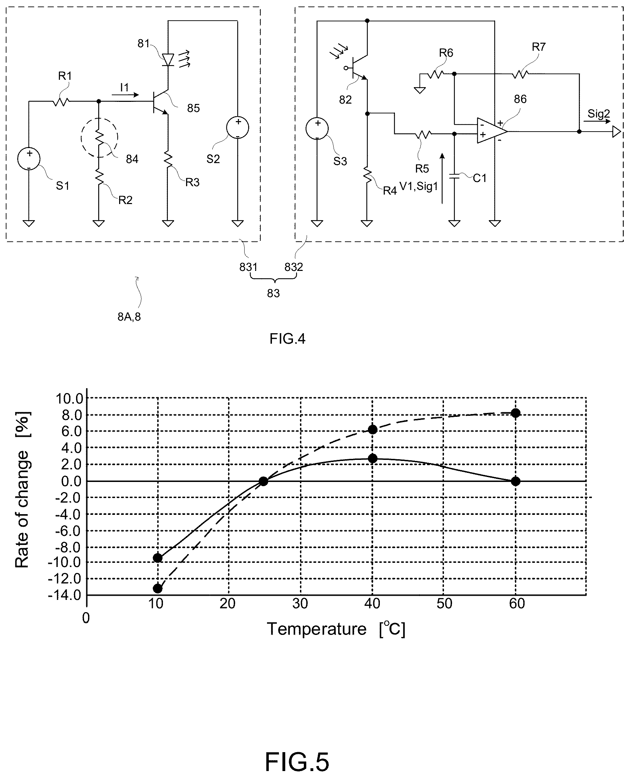

The sensor apparatus 8 detects a density of a toner image transferred onto the contactless region A2 on the outer peripheral surface of the intermediate transfer belt 22. For example, the sensor apparatus 8 is a reflective light sensor, and multiple sensor apparatuses 8 are aligned in the right-and-left direction D3. In the present embodiment, the image forming apparatus 100 includes two sensor apparatuses 8 that are a first sensor apparatus 8α and a second sensor apparatus 8β, and the two sensor apparatuses 8 are aligned in the right-and-left direction D3, as illustrated in Fig. 3. As illustrated in Fig. 1, the sensor apparatus 8 is arranged at a position at which the sensor apparatus 8 faces the suspending roller 222. The position is downstream of the transfer position in the rotational direction D4, where a toner image is transferred by the secondary transfer roller 23 at the transfer position. Note that the sensor apparatus 8 is not limited to being arranged at the position at which the sensor apparatus 8 faces the suspending roller 222, and may be arranged at another position. The sensor apparatus 8 outputs, to the controller 7, an output signal Sig2 (refer to Fig. 4) corresponding to a density of a detection-target toner image. A configuration of the sensor apparatus 8 will be described in detail later in "2. Sensor Apparatus."

Here, the controller 7 includes an adjustment processing section 71, as illustrated in Fig. 2. Specifically, the ROM of the controller 7 has stored therein an image quality adjusting program used to operate the CPU as the adjustment processing section 71. Further, the CPU operates as the adjustment processing section 71 by executing the image quality adjusting program stored in the ROM.

Note that the image quality adjusting program may be recorded in a computer-readable recording medium such as a CD, a DVD, or a flash memory, and may be read from the recording medium to be stored in a storage apparatus such as the storage 6. Further, the adjustment processing section 71 may include an electronic circuit. Furthermore, the image quality adjusting program may be a program used to operate a plurality of processors as the adjustment processing section 71.

In process of an image forming process performed using the image forming section 3, the adjustment processing section 71 adjusts an image quality of an output image output by an image forming process performed using toner. The image forming process is a process of forming an image based on image data on a sheet using the image forming section 3.

Specifically, for example, every time a predetermined adjustment condition is satisfied, the adjustment processing section 71 adjusts one adjustment target selected in a predetermined order from a plurality of adjustment targets related to an image quality of an output image.

Here, the plurality of adjustment targets includes a development bias voltage. When there is a change in a development bias voltage corresponding to one of the image forming units 20, there is a change in a density of a toner image formed by the one of the image forming units 20. In other words, it can be said that the development bias voltage is an image forming condition related to an image quality (a density) of an output image.

Further, the plurality of adjustment targets includes a light amount of light emitted by the light source 39. When there is a change in a light amount of light emitted by the light source 39 corresponding to one of print colors, there is a change in a density of a toner image based on an electrostatic latent image formed by the corresponding light source 39. In other words, it can be said that the light amount of light emitted by the light source 39 is an image forming condition related to the image quality (the density) of an output image.

Furthermore, the plurality of adjustment targets includes table data. When there is a change in table data corresponding to one of the print colors, there is a change in a density of a toner image formed using the corresponding table data. In other words, it can be said that the table data is data related to the image quality (the density) of an output image.

The adjustment processing section 71 performs an adjustment process when adjusting one of the plurality of adjustment targets. In the adjustment process, for example, a detection toner image for Y (yellow) is formed in the contactless region A2 on the intermediate transfer belt 22. In the adjustment process, the output signal Sig2 corresponding to a density of the detection toner image and being output by the sensor apparatus 8 is referred to. Further, in the adjustment process, an adjustment target for the image forming unit 20 corresponding to Y (yellow) is adjusted on the basis of the output signal Sig2, that is, on the basis of a result of detecting the density of the detection toner image. In the adjustment process, an adjustment target for the image forming unit 20 corresponding to another print color is adjusted, as in the case described above. In other words, the adjustment processing section 71 adjusts an image quality (a density) of an output image (an image formed on the intermediate transfer belt 22) on the basis of the output signal Sig2 output by the sensor apparatus 8.

Here, an image forming apparatus that reads, using a light sensor, a detection image formed on an image carrier, and that detects an image density of the detection image according to a result of the reading is known as a related technology. The light sensor includes a light emitting element that irradiates the detection image with light, a light receiving element that receives reflected light, a temperature detector that detects a temperature of the light sensor, and a current adjuster that adjusts an amount of current supplied to the light emitting element, on the basis of the temperature of the light sensor.

In the configuration of the related technology described above, a correction process to maintain an amount of light emitted by the light emitting element constant is performed in order to reduce a change in a result of detection performed by the light sensor (a sensor apparatus) that is caused due to a change in the temperature of the light emitting element. Further, in the configuration of the related technology described above, there is a need for not only the temperature detector but also the current adjuster serving as a processing apparatus (a processor) such as a CPU, in order to perform the correction process. Thus, in the configuration of the related technology described above, there is a need to perform designing including the processing apparatus. This results in obtaining a sensor apparatus with a complicated design.

On the other hand, in the present embodiment, the use of the sensor apparatus 8 described below enables the sensor apparatus 8 and the image forming apparatus 100 to reduce, without inclusion of the processing apparatus, a change in a result of detection performed by the sensor apparatus 8 that is caused due to a change in the temperature of the light emitting element.

### 2. Sensor Apparatus

The configuration of the sensor apparatus 8 is described in detail below with reference to Figs. 3 and 4. The sensor apparatus 8 according to the present embodiment is hereinafter referred to as a "sensor apparatus 8A", and the sensor apparatus 8 according to a second embodiment described later is hereinafter referred to as a "sensor apparatus 8B", in order to distinguish the sensor apparatus 8 according to the present embodiment from the sensor apparatus 8 according to the second embodiment.

As already described, the image forming apparatus 100 in the present embodiment includes two sensor apparatuses 8A that are the first sensor apparatus 8α and the second sensor apparatus 8β, as illustrated in Fig. 3.

The first sensor apparatus 8α includes a first light emitting element 811 that serves as a light emitting element 81 (described later), and a first light receiving element 821 that serves as a light receiving element 82 (described later). In the first sensor apparatus 8α, the first light emitting element 811 and the first light receiving element 821 are arranged such that the first light receiving element 821 receives light specularly reflected off the contactless region A2 of an image carrier (the intermediate transfer belt 22 in the present embodiment). Specifically, in the first sensor apparatus 8α, the first light emitting element 811 and the first light receiving element 821 are arranged such that an angle of incidence of light incident on the intermediate transfer belt 22 from the first light emitting element 811, and an angle of reflection of light reflected off the first light receiving element 821 from the intermediate transfer belt 22 are substantially the same. In other words, it can be said that the first sensor apparatus 8α is a specularly reflective light sensor apparatus.

The second sensor apparatus 8β includes a second light emitting element 812 that serves as the light emitting element 81, and a second light receiving element 822 that serves as the light receiving element 82. In the second sensor apparatus 8β, the second light emitting element 812 and the second light receiving element 822 are arranged such that the second light receiving element 822 receives light diffusely reflected off the contactless region A2 of the image carrier (the intermediate transfer belt 22 in the present embodiment). Specifically, in the second sensor apparatus 8β, the second light emitting element 812 and the second light receiving element 822 are arranged such that an angle of incidence of light incident on the intermediate transfer belt 22 from the second light emitting element 812, and an angle of reflection of light diffusely reflected off the second light receiving element 822 from the intermediate transfer belt 22 are different from each other. In other words, it can be said that the second sensor apparatus 8β is a diffusely reflective light sensor apparatus.

In the present embodiment, a density of a detection toner image formed in the contactless region A2 of the intermediate transfer belt 22 is detected using, in combination, the first sensor apparatus 8α that is a specularly reflective light sensor apparatus, and the second sensor apparatus 8β that is a diffusely reflective light sensor apparatus. This makes it possible to detect, using the first sensor apparatus 8α, a density that corresponds to a print color of K (black) in the detection toner image, and to detect, using the second sensor apparatus 8β, densities that respectively correspond to relatively light print colors of Y (yellow), M (magenta), and C (cyan) in the detection toner image.

In a configuration of the sensor apparatus 8A, a plurality of circuit elements included in an electric circuit 83 is mounted on a board 80, as illustrated in Figs. 3 and 4. The electric circuit 83 includes the light emitting element 81, the light receiving element 82, and an impedance element 84. In other words, the sensor apparatus 8A includes the light emitting element 81, the light receiving element 82, the electric circuit 83, and the impedance element 84.

The "circuit element" in the present disclosure is an element that includes a single function, and may include, for example, a passive element such as a resistance, a capacitor, or a coil; or an active element such as a diode or a transistor. Thus, the "circuit element" does not include an integrated circuit (IC) obtained by combining a plurality of semiconductor elements each including a single function into a single package. Further, the "circuit element" does not include a processing apparatus (a processor) such as a CPU, a graphics processing unit (GPU), a field programmable gate array (FPGA), or an application specific integrated circuit (ASIC).

The light emitting element 81 emits light in response to being supplied with power, and irradiates light onto an image carrier (the intermediate transfer belt 22) that carries a toner image in the image forming apparatus 100. In the present embodiment, the light emitting element 81 includes, for example, a light-emitting diode (LED) that irradiates light of a specific color such as white. The light emitting element 81 may include a single LED or a plurality of LEDs. Note that the light emitting element 81 is not limited to an LED, and may be, for example, an organic electroluminescence (EL) element or a semiconductor laser.

The light receiving element 82 receives light reflected off an image carrier (the intermediate transfer belt 22). In the present embodiment, the light receiving element 82 includes a phototransistor. The light receiving element 82 may include a single phototransistor or a plurality of phototransistors. Note that the light receiving element 82 is not limited to a phototransistor, and may be, for example, a photodiode.

The electric circuit 83 includes the plurality of circuit elements including the light emitting element 81 and the light receiving element 82. Further, the electric circuit 83 outputs the output signal Sig2 corresponding to a density of a toner image (in the present embodiment, a detection toner image formed on the intermediate transfer belt 22). In other words, the sensor apparatus 8 outputs the output signal Sig2 corresponding to a density of a toner image in the image forming apparatus 100. In the present embodiment, the electric circuit 83 is a discrete circuit obtained by combining the plurality of circuit elements each including a single function.

The impedance element 84 is included in the plurality of circuit elements, and changes an impedance of the impedance element 84 according to a temperature of the impedance element 84.

In the present embodiment, the impedance element 84 is a thermistor that changes a resistance value of the impedance element 84 according to a change in the temperature of the impedance element 84. Further, the impedance element 84 is a negative-temperature-coefficient (NTC) thermistor that has characteristics in that an impedance (a resistance value) of the thermistor is decreased as a temperature of the thermistor rises.

Here, the impedance element 84 is included in the electric circuit 83 together with the light emitting element 81 and arranged near the light emitting element 81. Thus, the temperature of the impedance element 84 is substantially the same as a temperature of the light emitting element 81. Therefore, the impedance element 84 changes the resistance value according to a change in the temperature of the light emitting element 81.

As illustrated in Fig. 4, the electric circuit 83 includes a light emitting circuit 831 that includes the light emitting element 81, and a light receiving circuit 832 that includes the light receiving element 82. The light emitting circuit 831 and the light receiving circuit 832 are spaced from each other on a surface of the board 80 and electrically insulated from each other. Further, in the present embodiment, the impedance element 84 is included in the light emitting circuit 831.

The light emitting circuit 831 includes an amplification element 85 that amplifies an input current I1 and that supplies the amplified input current I1 to the light emitting element 81. In the present embodiment, the amplification element 85 is an NPN-type bipolar transistor. Thus, the input current I1 is a base current that is input to a base of the amplification element 85. Note that the amplification element 85 is not limited to an NPN-type bipolar transistor, and may be, for example, a field effect transistor (FET).

The base of the amplification element 85 is connected to a first end of a resistive element R1. A second end of the resistive element R1 is connected to an anode of a first voltage source S1. A cathode of the first voltage source S1 is grounded. The first voltage source S1 is, for example, a constant voltage source that outputs a constant DC voltage of a few volts.

The base of the amplification element 85 and the first end of the resistive element R1 are each connected to a first end of the impedance element 84. A second end of the impedance element 84 is connected to a first end of a resistive element R2. A second end of the resistive element R2 is grounded. In other words, the impedance element 84 forms a series circuit together with the resistive element R2, where the series circuit is connected to the base of the amplification element 85 and to the first end of the resistive element R1. Note that, in the series circuit, the impedance element 84 and the resistive element R2 may be connected in reverse order.

A collector of the amplification element 85 is connected to a cathode of the light emitting element 81. An anode of the light emitting element 81 is connected to an anode of a second voltage source S2. A cathode of the second voltage source S2 is grounded. The second voltage source S2 is, for example, a constant voltage source that outputs a constant DC voltage of a few volts. An emitter of the amplification element 85 is connected to a first end of a resistive element R3. A second end of the resistive element R3 is grounded.

A base current (the input current 11) of the amplification element 85 is amplified according to an amplification factor in the amplification element 85 and supplied to the light emitting element 81 as a collector current. This results in the light emitting element 81 emitting light with an intensity corresponding to a magnitude of the supplied collector current.

The light emitting circuit 831 may include a single resistive element R1 or a plurality of resistive elements R1, a single resistive element R2 or a plurality of resistive elements R2, and a single resistive element R3 or a plurality of resistive elements R3. Further, the light emitting circuit 831 may include a single impedance element 84 or a plurality of impedance elements 84.

The light receiving circuit 832 includes the light receiving element 82 serving as a phototransistor, where a magnitude of a voltage across the phototransistor is changed according to an amount of light received. In the present embodiment, a voltage across the light receiving element 82 corresponds to a voltage between a collector and an emitter of the light receiving element 82. The collector of the light receiving element 82 is connected to an anode of a third voltage source S3. A cathode of the third voltage source S3 is grounded. The third voltage source S3 is, for example, a constant voltage source that outputs a constant DC voltage of a few volts.

The emitter of the light receiving element 82 is connected to a first end of a resistive element R4. A second end of the resistive element R4 is grounded. Further, the emitter of the light receiving element 82 is connected to a first end of a resistive element R5. A second end of the resistive element R5 is connected to a non-inverting input terminal of an amplification section 86. The second end of the resistive element R5 and the non-inverting input terminal of the amplification section 86 are each connected to a first end of a capacitor C1. A second end of the capacitor C1 is grounded.

An inverting input terminal of the amplification section 86 is connected to a first end of the resistive element R6. A second end of the resistive element R6 is grounded. Further, the inverting input terminal of the amplification section 86 is connected to a first end of a resistive element R7. A second end of the resistive element R7 is connected to an output terminal of the amplification section 86.

The light receiving circuit 832 may include a single resistive element R5 or a plurality of resistive elements R5, a single resistive element R6 or a plurality of resistive elements R6, and a single resistive element R7 or a plurality of resistive elements R7.

### 3. Operation of Electric Circuit

An operation of the electric circuit 83 is described below. In the light emitting circuit 831, the light emitting element 81 emits light by being supplied with a collector current. In the light receiving circuit 832, a voltage across the light receiving element 82 (a voltage between the collector and the emitter) that corresponds to an amount of light received is exhibited by the light receiving element 82 receiving light reflected off an image carrier (the intermediate transfer belt 22). A charging voltage V1 of the capacitor C1 is input to the non-inverting input terminal of the amplification section 86. The charging voltage V1 of the capacitor C1 is changed according to the voltage between the collector and the emitter of the light receiving element 82. Specifically, the charging voltage V1 of the capacitor C1 is decreased as the voltage between the collector and the emitter of the light receiving element 82 is increased, and the charging voltage V1 of the capacitor C1 is increased as the voltage between the collector and the emitter is decreased. Further, the amplification section 86 amplifies an input voltage (the charging voltage V1 of the capacitor C1) input to the non-inverting input terminal, and outputs the amplified input voltage as the output signal Sig2. In other words, the amplification section 86 amplifies an electric signal Sig1 (here, the charging voltage of the capacitor C1) of which a magnitude is changed according to an amount of light received by the light receiving element 82, and outputs the amplified electric signal Sig1 as the output signal Sig2. An amplification factor in the amplification section 86 is a value obtained by dividing a resistance value of the resistive element R7 by a resistance value of the resistive element R6.

In other words, in the electric circuit 83, an amount of light received by the light receiving element 82 is increased as an amount of light emitted by the light emitting element 81 is increased, and a magnitude of the output signal Sig2 becomes smaller as an input voltage input to the non-inverting input terminal of the amplification section 86 is decreased. On the other hand, the amount of light received by the light receiving element 82 is decreased as the amount of light emitted by the light emitting element 81 is decreased, and the magnitude of the output signal Sig2 becomes larger as the input voltage input to the non-inverting input terminal of the amplification section 86 is increased. In other words, the output signal Sig2 is a signal of which a magnitude is changed according to an amount of light received by the light receiving element 82.

Here, when the light emitting circuit 831 does not include the impedance element 84, a magnitude of a base current (the input current 11) input to the base of the amplification element 85 is determined by an output voltage of the first voltage source S1, and resistance values of the respective resistive elements R1, R2, and R3. In the present embodiment, the impedance element 84 is connected to the resistive element R2 in series, as described above. In other words, the impedance element 84 is connected in series to a circuit element (the resistive element R2), from among the plurality of circuit elements included in the electric circuit 83, that determines the magnitude of the input current 11. Thus, in the present embodiment, the magnitude of the input current I1 is determined by the output voltage of the first voltage source S1, the resistance values of the respective resistive elements R1, R2, and R3, and the impedance of the impedance element 84.

Further, the impedance (the resistance value) of the impedance element 84 is changed according to the temperature of the impedance element 84 and thus according to the temperature of the light emitting element 81. Furthermore, the resistance value of the impedance element 84 is one of factors used to determine the magnitude of the input current I1. Thus, when the resistance value of the impedance element 84 is changed due to a change in the temperature of the light emitting element 81, the magnitude of the input current I1 is also changed due to the change in the temperature of the light emitting element 81.

Moreover, the magnitude of the input current I1 becomes smaller as a resistance value of the series circuit formed of the resistive element R2 and the impedance element 84 becomes larger, and the magnitude of the input current I1 becomes larger as the resistance value of the series circuit becomes smaller. In the present embodiment, the impedance element 84 is an NTC thermistor, and has characteristics in that the resistance value of the impedance element 84 becomes smaller as the temperature of the impedance element 84 and thus the temperature of the light emitting element 81 rises. Therefore, the resistance value of the series circuit formed of the resistive element R2 and the impedance element 84 becomes smaller as the temperature of the light emitting element 81 rises, and thus the magnitude of the input current I1 becomes larger as the temperature of the light emitting element 81 rises.

Here, the light emitting element 81 has characteristics in that an amount of light emitted by the light emitting element 81 becomes smaller as the temperature of the light emitting element 81 rises. Thus, when the electric circuit 83 does not include the impedance element 84, the amount of light emission becomes smaller than the amount of light emission at a normal temperature (for example, 25 degrees C) as the temperature of the light emitting element 81 rises. Further, when the amount of light emitted by the light emitting element 81 becomes smaller than the amount of light emission at the normal temperature, the magnitude of the output signal Sig2 becomes larger than the magnitude at the normal temperature. In other words, when the electric circuit 83 does not include the impedance element 84, the magnitude of the output signal Sig2 is changed due to a change in the temperature of the light emitting element 81. This results in a reduction in the accuracy in detecting a density of a detection toner image.

On the other hand, the light emitting circuit 831 includes the impedance element 84 in the present embodiment. This makes it possible to solve the issue described above. In other words, the impedance (the resistance value) of the impedance element 84 is decreased as the temperature of the light emitting element 81 rises. Thus, the resistance value of the series circuit formed of the resistive element R2 and the impedance element 84 becomes smaller. This results in an increase in base current (the input current 11). Thus, there is also an increase in a collector current supplied to the light emitting element 81, and there is an increase in the amount of light of the light emitting element 81. In other words, the magnitude of current (the collector current) supplied to the light emitting element 81 is changed according to the impedance of the impedance element 84.

In the present embodiment, the use of the characteristics of the impedance element 84 makes it possible to reduce a change in an amount of light emitted by the light emitting element 81 that is caused due to a change in temperature, as described above. Further, the reduction in the change in the amount of light emitted by the light emitting element 81 also makes it possible to reduce a change in the magnitude of the output signal Sig2. As a result, a degree of reduction in the accuracy in detecting a density of a detection toner image can be made lower. In other words, the impedance element 84 is connected to the light emitting element 81 or the light receiving element 82 (in the present embodiment, the light emitting element 81) such that a change in the magnitude of the output signal Sig2 that is caused due to a change in the temperature of the light emitting element 81 is reduced.

Fig. 5 illustrates effects provided by the electric circuit 83 including the impedance element 84. In Fig. 5, a vertical axis represents a rate of change in a magnitude of the output signal Sig2, and a horizontal axis represents a temperature of the light emitting element 81. Further, a graph with a solid line in Fig. 5 represents temperature characteristics for a rate of change caused in the case in which the electric circuit 83 includes the impedance element 84 (hereinafter referred to as the "case of the present embodiment"). A graph with a dashed line in Fig. 5 represents temperature characteristics for a rate of change caused in the case in which the electric circuit 83 does not include the impedance element 84 (hereinafter referred to as the "case of a comparative example"). Further, the rate of change of 0.0% in Fig. 5 means that the magnitude of the output signal Sig2 is the same as the magnitude of the output signal Sig2 at the normal temperature.

As illustrated in Fig. 5, in the case of the comparative example, the rate of change is increased up to about 8.0% as the temperature of the light emitting element 81 rises in a region (here, a region for 25 to 60 degrees C) in which the temperature of the light emitting element 81 is higher than the normal temperature. On the other hand, in the case of the present embodiment, the rate of change is only increased up to about 3.0% due to the rise in the temperature of the light emitting element 81 in the region in which the temperature of the light emitting element 81 is higher than the normal temperature. Further, in the present embodiment, a degree of the increase in rate of change is also made lower in a region (here, a region for 10 to 25 degrees C) in which the temperature of the light emitting element 81 is lower than the normal temperature, compared to the case of the comparative example.

As described above, the sensor apparatus 8A according to the present embodiment includes the impedance element 84, and this makes it possible to reduce, without requiring a processing apparatus such as a CPU, a change in a result of detection performed by the sensor apparatus 8A (the output signal Sig2), where the change in the detection result is caused due to a change in the temperature of the light emitting element 81. Thus, in the present embodiment, there is no need to perform designing including a processing apparatus, as in the case of the configuration of the related technology described above, and this makes it possible to simply design the sensor apparatus 8A. Specifically, in the configuration of the related technology described above, the temperature of the light emitting element is detected using, for example, a thermistor, and a correction process based on the detected temperature is performed using a processing apparatus. In this case, in addition to the processing apparatus, there is a need for wiring used to communicate, to the processing apparatus, a result of detection performed using the thermistor. In the present embodiment, these are not necessary.

### Second Embodiment

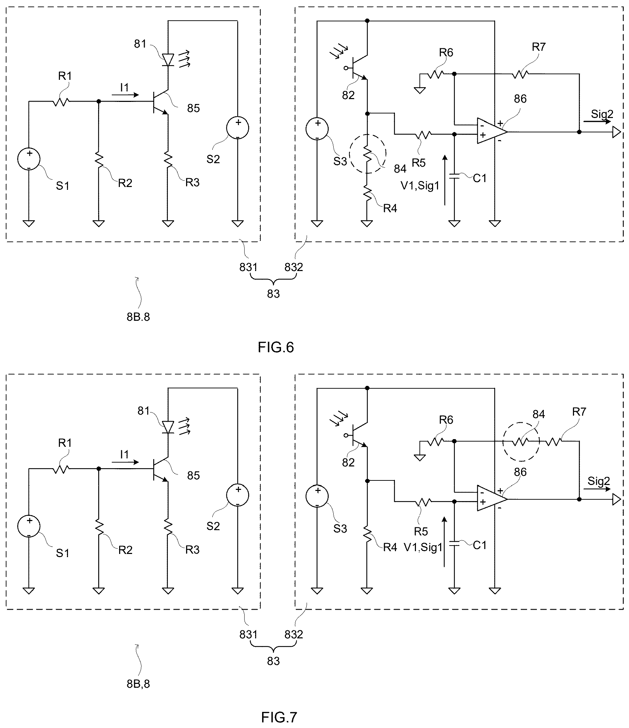

A configuration of the sensor apparatus 8B according to the second embodiment is described in detail below with reference to Fig. 6. The sensor apparatus 8B according to the present embodiment is different from the sensor apparatus 8A according to the first embodiment in that the impedance element 84 is not included in the light emitting circuit 831 but in the light receiving circuit 832. Note that the impedance element 84 is provided to the light receiving circuit 832 but is arranged near the light emitting element 81. Thus, an impedance (a resistance value) of the impedance element 84 is changed according to a temperature of the impedance element 84 and thus according to a temperature of the light emitting element 81, as in the case of the first embodiment. A description of the configuration shared with the first embodiment is appropriately omitted below.

In the present embodiment, the impedance element 84 is an NTC thermistor that has characteristics in that an impedance (a resistance value) of the thermistor is decreased as a temperature of the thermistor rises, as in the case of the first embodiment. Further, in the present embodiment, a first end of the impedance element 84 is connected to the emitter of the light receiving element 82 and to the first end of the resistive element R5, and a second end of the impedance element 84 is connected to the first end of the resistive element R4. In other words, the impedance element 84 forms a series circuit together with the resistive element R4, where the series circuit is connected to the emitter of the light receiving element 82 and to the first end of the resistive element R5. Note that, in the series circuit, the impedance element 84 and the resistive element R4 may be connected in reverse order.

Here, when the light receiving circuit 832 does not include the impedance element 84, a magnitude of an output signal Sig2 is determined by a charging voltage V1 of the capacitor C1 that is input to the non-inverting input terminal of the amplification section 86. Further, the charging voltage V1 of the capacitor C1 is determined by the voltage between the collector and the emitter of the light receiving element 82 and a resistance value of the series circuit formed of the resistive element R4 and the impedance element 84. In the present embodiment, the impedance element 84 is connected to the resistive element R4, as described above. In other words, the magnitude of the output signal Sig2 is changed according to the impedance of the impedance element 84.

Further, the charging voltage V1 of the capacitor C1 is increased as the resistance value of the series circuit formed of the resistive element R4 and the impedance element 84 becomes larger, and the charging voltage V1 of the capacitor C1 is decreased as the resistance value of the series circuit becomes smaller. In the present embodiment, the impedance element 84 is an NTC thermistor. Thus, the resistance value of the series circuit becomes smaller as the temperature of the light emitting element 81 rises. Therefore, the charging voltage V1 of the capacitor C1 is decreased as the temperature of the light emitting element 81 rises.

Here, when the electric circuit 83 does not include the impedance element 84, an amount of light emitted by the light emitting element 81 becomes smaller than the amount of light emission at the normal temperature as the temperature of the light emitting element 81 rises. Further, when the amount of light emitted by the light emitting element 81 becomes smaller than the amount of light emission at the normal temperature, the magnitude of the output signal Sig2 becomes larger than the magnitude at the normal temperature. On the other hand, in the present embodiment, the impedance (the resistance value) of the impedance element 84 is decreased as the temperature of the light emitting element 81 rises. This results in a reduction in the charging voltage V1 of the capacitor C1, and thus the magnitude of the output signal Sig2 is changed to be smaller.

In the present embodiment, the use of the characteristics of the impedance element 84 makes it possible to reduce a change in the magnitude of the output signal Sig2 that is caused due to a change in temperature, as described above. As a result, a degree of reduction in the accuracy in detecting a density of a detection toner image can be made lower.

The impedance element 84 is not limited to being connected to the resistive element R4, as described above. For example, the impedance element 84 may be connected between the resistive element R6 and the resistive element R7, as illustrated in Fig. 7. Specifically, a first end of the impedance element 84 is connected to the inverting input terminal of the amplification section 86 and to the first end of the resistive element R6. A second end of the impedance element 84 is connected to the first end of the resistive element R7. In other words, the impedance element 84 forms a series circuit together with the resistive element R7, where the series circuit is connected to the inverting input terminal of the amplification section 86 and to the first end of the resistive element R6. Note that, in the series circuit, the impedance element 84 and the resistive element R7 may be connected in reverse order.

Here, when the light receiving circuit 832 does not include the impedance element 84, the magnitude of the output signal Sig2 is determined by an amplification factor determined by the resistance values of the resistive elements R6 and R7. Further, the impedance element 84 is connected to the resistive elements R6 and R7. That is, the impedance element 84 is connected to the circuit elements (the resistive elements R6 and R7) by which an amplification factor of an electric signal Sig1 with respect to the output signal Sig2 is determined. In other words, the amplification factor of the electric signal Sig1 with respect to the output signal Sig2 in the amplification section 86 is changed according to the impedance of the impedance element 84.

Further, the amplification factor is increased as the resistance value of the series circuit formed of the resistive element R7 and the impedance element 84 becomes larger, and the amplification factor is decreased as the resistance value of the series circuit becomes smaller. In the present embodiment, the impedance element 84 is an NTC thermistor. Thus, the resistance value of the series circuit becomes smaller as the temperature of the light emitting element 81 rises. Therefore, the amplification factor is decreased as the temperature of the light emitting element 81 rises.

Further, in the present embodiment, the impedance (the resistance value) of the impedance element 84 is decreased as the temperature of the light emitting element 81 rises. This results in a reduction in amplification factor, and thus the magnitude of the output signal Sig2 is changed to be smaller. In the configuration illustrated in Fig. 7, the use of the characteristics of the impedance element 84 also makes it possible to reduce a change in the magnitude of the output signal Sig2 that is caused due to a change in temperature, as described above. As a result, a degree of reduction in the accuracy in detecting a density of a detection toner image can be made lower.

### Modifications

In the first and second embodiments, the impedance element 84 is an NTC thermistor, although the impedance element 84 is not limited thereto. For example, the impedance element 84 may be a positive-temperature-coefficient (PTC) thermistor in which a resistance value of the thermistor becomes larger as a temperature of the thermistor rises. However, the PTC thermistor has characteristics in that the resistance value of the thermistor is abruptly changed when the temperature of the thermistor exceeds a certain temperature. Thus, it is difficult to perform designing such that a change in the output signal Sig2 that is caused due to a change in temperature is reduced. On the other hand, the NTC thermistor has characteristics in that the resistance value of the thermistor is changed gradually due to a change in the temperature of the thermistor. This makes it easy to perform designing such that a change in the output signal Sig2 that is caused due to a change in temperature is reduced.

In the first embodiment described above, the circuit including the impedance element 84 may only include the impedance element 84 instead of including the series circuit formed of the resistive element R2 and the impedance element 84. However, the inclusion of the series circuit enables the circuit including the impedance element 84 to appropriately reduce a change in the output signal Sig2 that is caused due to a change in the temperature of the light emitting element 81, compared to when only the impedance element 84 is included.

In the configuration of the second embodiment illustrated in Fig. 6, the circuit including the impedance element 84 may only include the impedance element 84 instead of including the series circuit formed of the resistive element R4 and the impedance element 84. Further, in the configuration illustrated in Fig. 7, the circuit including the impedance element 84 may also only include the impedance element 84 instead of including the series circuit formed of the resistive element R7 and the impedance element 84. In these configurations, the inclusion of the series circuit also enables the circuit including the impedance element 84 to appropriately reduce a change in the output signal Sig2 that is caused due to a change in the temperature of the light emitting element 81, compared to when only the impedance element 84 is included.

In the first and second embodiments described above, the impedance element 84 is included in one of the light emitting circuit 831 and the light receiving circuit 832. However, the impedance element 84 is not limited thereto. For example, the impedance element 84 may be included in each of the light emitting circuit 831 and the light receiving circuit 832.

In the first and second embodiments described above, the image carrier is the intermediate transfer belt 22. However, the image carrier is not limited thereto. It is only required that a detection toner image that is to be detected by the sensor apparatus 8 can be formed on the image carrier, and the image carrier may be, for example, the photoconductor drum 31.

In the first and second embodiments described above, the image forming section 3 includes a printing function performed to form a color image or a monochrome image on a sheet supplied by the sheet feeder 4. However, the image forming section 3 is not limited thereto. For example, the image forming section 3 may include a printing function performed to only form a monochrome image on the sheet. In this case, the image carrier may be a photoconductor drum instead of the intermediate transfer belt 22.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A sensor apparatus (8) that outputs an output signal (Sig2) corresponding to a density of a toner image in an image forming apparatus (100), the sensor apparatus (8) comprising:
a light emitting element (81) that irradiates light onto an image carrier that carries the toner image;
a light receiving element (82) that receives light reflected off the image carrier; and
an impedance element (84) that changes an impedance of the impedance element (84) according to a temperature of the impedance element (84),
the output signal (Sig2) being a signal of which a magnitude is changed according to an amount of light received by the light receiving element (82),
the impedance element (84) being connected to the light emitting element (81) or the light receiving element (82) such that a change in the magnitude of the output signal (Sig2) that is caused due to a change in a temperature of the light emitting element (81) is reduced.

2. The sensor apparatus (8) according to claim 1, wherein
the impedance element (84) has characteristics in that the impedance is decreased as the temperature of the impedance element (84) rises.

3. The sensor apparatus (8) according to claim 1 or 2, wherein
a light emitting circuit (831) that includes the light emitting element (81), and a light receiving circuit (832) that includes the light receiving element (82) are electrically insulated from each other, and
the impedance element (84) is included in the light emitting circuit (831).

4. The sensor apparatus (8) according to claim 3, wherein
a magnitude of current supplied to the light emitting element (81) is changed according to the impedance of the impedance element (84).

5. The sensor apparatus (8) according to claim 1 or 2, wherein
a light emitting circuit (831) that includes the light emitting element (81), and a light receiving circuit (832) that includes the light receiving element (82) are electrically insulated from each other, and
the impedance element (84) is included in the light receiving circuit (832).

6. The sensor apparatus (8) according to claim 5, wherein
the magnitude of the output signal (Sig2) is changed according to the impedance of the impedance element (84).

7. The sensor apparatus (8) according to claim 6, wherein
the light receiving circuit (832) includes an amplification section (86) that amplifies an electric signal and that outputs the amplified electric signal as the output signal (Sig2), the electric signal having a magnitude that is changed according to the amount of light received by the light receiving element (82), and
an amplification factor of the electric signal with respect to the output signal (Sig2) in the amplification section (86) is changed according to the impedance of the impedance element (84).

8. An image forming apparatus (100), comprising:
the sensor apparatus (8) according to claim 1 or 2;
an image forming section (3) that includes the image carrier and that forms the toner image; and
an adjustment processing section (71) that adjusts the density of the toner image on a basis of the output signal (Sig2) output by the sensor apparatus (8).
